Europäisches Patentamt

**European Patent Office** (11) Numéro de publication: **0 042 316 B1**

Office européen des brevets

(12) **FASCICULE DE BREVET EUROPEEN**

(45) Date de publication du fascicule du brevet: 10.10.84

(21) Numéro de dépôt: 81400851.2

(22) Date de dépôt: 27.05.81

(51) Int. Cl.³: **C 09 C 1/28, C 08 K 3/34**

(54) **Procédé de renforcement de polymères au moyen d'une charge de zéolite synthétique à haute dispersibilité.**

(30) Priorité: 09.06.80 FR 8012742

(43) Date de publication de la demande: 23.12.81 Bulletin 81/51

(45) Mention de la délivrance du brevet: 10.10.84 Bulletin 84/41

(84) Etats contractants désignés:
AT BE CH DE FR GB IT LI LU NL SE

(56) Documents cités:
EP - A - 0 007 608
FR - A - 2 189 465
GB - A - 841 831

CHEMICAL ABSTRACTS, vol. 89, no. 26, 25 décembre 1978, réf, no. 216253v, page 36 Columbus, Ohio, US SHIMADA, TAKESHI: "Effect of inorganic fillers on the property of polypropylene resin"
CHEMICAL ABSTRACTS, vol. 92, no. 16, 21 avril 1980, réf. no. 129988g, page 47, Columbus, Ohio, US
CHEMICAL ABSTRACTS, vol. 75, no. 10, 6, septembre 1971, réf. no. 65029j, page 56, Columbus, Ohio, US G.N. VTOROV et al.: "Use of zeolites in the manufacture of porous rubbers"
CHEMICAL ABSTRACTS, vol. 81, no. 14, 7 octobre 1975, réf. no. 78791a, page 42 Columbus, Ohio, US

(73) Titulaire: RHONE-POULENC CHIMIE DE BASE, 25, quai Paul Doumer, F-92408 Courbevoie (FR)

(72) Inventeur: Canard, Pierre, 29, rue Berthier, F-78000 - Versailles (FR)
Inventeur: Latourrette, Betrand, 21, Allée Clémencet, F-93340 -- Le raincy (FR)
Inventeur: Schorsch, Gilbert, 9, rue Seiller, F-92700 - Colombes (FR)

(74) Mandataire: Martin, Henri et al, RHONE-POULENC RECHERCHES Service Brevets Chimie et Polymères 25, quai Paul Doumer, F-92408 Courbevoie Cedex (FR)

BUNDESDRUCKEREI BERLIN

## Description

L'invention a pour objet un procédé de renforcement de polymères au moyen d'une charge de zéolite synthétique à haute dispersibilité.

Il est connu longtemps de faire appel à des charges minérales pour améliorer certaines propriétés des élastomères et des matières plastiques en général.

Malheureusement cet apport peut présenter deux types d'inconvénient: l'un économique si le prix de la charge est trop élevé, et l'autre technique si l'amélioration apportée se fait au détriment d'autres propriétés, ce qui est souvent le cas.

De plus, le comportement de la charge est aussi souvent caractéristique du couple charge-élastomère ou charge-matière plastique pour des raisons liées à la morphologie de la charge, et la matrice polymère, et de chimie de surface. C'est ainsi que certaines lois généralement admises sont plus ou moins bien vérifiées. Toutefois avec les charges habituelles on peut observer qu'une charge plus grosse se disperse mieux qu'une charge plus fine.

La demanderesse a ainsi été amenée à étudier les facteurs susceptibles de conduire à bonne dispersion, et à essayer de mettre au point une charge qui réponde à cette exigence de dispersion, et à en vérifier le bienfait sur l'amélioration du comportement dans des cas précis.

Les travaux de la demanderesse ont été dirigés sur les zéolites. On sait que l'on a déjà incorporé des zéolites naturelles dans du polypropylène, voir Natural Zéolites de L. B. Sand et F. A. Mumpton — Pergamon Press, p. 447. Selon les résultats indiqués dans cette référence, il est visible par exemple que du polypropylène chargé de clinoptilolite voit sa résistance à l'impact diminuer.

Par ailleurs, on a décrit, dans le FR-A-2 189 465 notamment polypropylène et polyamide, contenant à l'état dispersé des zéolites synthétiques, par exemple de type 4A, de dimension moyenne des particules comprise entre 2 µm et 10 µm, mais il ne s'agit que de l'incorporation d'une infime proportion de charge qui ne saurait influer sur les propriétés renforçantes du polymère.

De même, dans l'EP-A-0 007 608, on décrit l'incorporation de zéolite afin d'améliorer les propriétés anti-blocage de feuilles en matières thermoplastiques, mais en de très petites quantités.

On a aussi proposé d'améliorer les propriétés choc du polypropylène avec des charges à base de carbonate de calcium. Mais l'amélioration des propriétés choc obtenue est souvent insuffisantes par rapport aux exigences des applications.

Or, la demanderesse a trouvé que de manière surprenante l'on pouvait obvier à ces inconvénients en faisant appel à une zéolite synthétique de faible taille de particule.

Selon le procédé de l'invention, on incorpore, dans une matière à base de polypropylène ou de polyamide, une charge à haute dispersibilité et ce procédé se caractérise par le fait qu'il consiste à mettre en œuvre une charge constituée par une zéolite synthétique du groupe de la zéolite A et plus particulièrement 4A et de la zéolite Na-P, de taille de particules inférieure à 10 µm et de taille moyenne de particules élémentaires voisine de celle des particules secondaires.

Selon la présente invention, la taille des particules élémentaires est le diamètre apparent de la particule; c'est-à-dire diagonale de la face d'un cube ou diamètre d'une sphère si la particule est sphérique.

La taille des particules secondaires est appréciée par un appareil de mesure de type Coulter dans des conditions définie plus loin.

L'écart les deux types de particules doit être le plus réduit possible. Toutefois on observe selon l'invention que pour les petites tailles de particules, c'est-à-dire de l'ordre du micromètre ou quelques celui-ci peut être plus grand en valeur relative, mais doit rester faible en valeur absolue, et avantageusement ne doit pas dépasser un micromètre.

Bien évidemment, les limites que l'on vient de donner ne sont pas critiques. Elles dépendent de la hauteur de l'exigence de l'effet que l'on veut obtenir.

Avantageusement les particules utilisées dans le procédé selon l'invention présentent une forme régulière sans angle saillant. Ainsi une forme sensiblement sphérique dans la cas de la zéolite 4A apparait comme favorable.

Les charges utilisées dans le procédé selon l'invention présentent la faculté de se disperser remarquablement dans le polypropylène et le polyamide.

Cette bonne dispersibilité est avantageuse dans les polyamides.

L'on observe de manière inattendue une amélioration spectaculaire des propriétés choc du polypropylène, tout en conservant l'amélioration du module à la flexion due à l'apport de la charge.

Mais la présente invention sera mieux comprise à l'aide des exemples ci-après.

Dans les exemples les diverses mesures sont réalisées comme suit.

1) Caractérisation de la zéolite:

— Détermination de la taille des particules élémentaires.

On dispose sur un porte échantillon d'un microscope à balayage un ruban adhésif double face. On place la quantité appropriée d'échantillon sous forme pulvérulente. On retourne le porte-échantillon pour éliminer l'excès de poudre. On met une laque carbone autour de la poudre de manière à assurer un bon contact, on métallise et on observe.

Avec un grandissement de l'ordre de 2000 à 9000 on observe les particules sur un échantillon représentant au moins 20 μm × 20 μm, et on détermine la taille des particules élémentaires en considérant le diamètre apparent sur dix particules considérées comme typiques de l'échantillon.

-- Détermination de la taille des particules secondaires.

Elle est réalisée au moyen d'un compteur Coulter, en choisissant comme électrolyte la solution suivante en poids:

| | |
|---|---|
| eau | 78% |
| glycérine | 20% |
| NaCl | 1% |
| hexamétaphosphate de Na | 0,5% |
| formol | 0,5% |
| | |
| Dispersion 10 min (Ultra-son) | 40 000 Hertz |
| | 100 Watts |

2) Caractérisation du composite:

Les composites sont préparés de la façon suivante:

— Dans le cas du polypropylène par mélange à froid du polymère en poudre et de la charge sur mélangeur externe Henschel pendant 15 min suivi d'un malaxage à 80°C pendant 15 min sur mélangeur Banbury ou extrusion sur extrudeuse mono ou double vis.
Le produit après granulation est ensuite injecté à 230°C sur une presse d'injection Monomat pour obtention de plaquettes.
— Dans le cas du polyamide de mélange polyamide granulé/charge en poudre est extrudé sur extrudeuse monovis rotative et alternative Buss à 270°C, granulé, puis injecté à 270°C pour obtention de plaquettes.
Sur les éprouvettes ainsi moulées on détermine l'état de dispersion dans le polymère. On apprécie en particulier de manière visuelle au microscope optique et/ou électronique la présence éventuelle de conglomérats de charge.
— Dans le cas des systèmes (polypropylène/charge), on évalue sur les éprouvettes moulées, le module de rigidité en flexion NF T 51 001 et le choc à froid suivant la méthode Charpy non entaillé à −20°C (Norme NF T 51 035).

3) Les polymères de base utilisés sont:

— Polypropylène Napryl® 61 200 AQ
— (Poudre de Naphtachimie d'indice de viscosité 110 selon normes NF T 51 620)
— Polyamide A 216 de Rhone-Poulenc
— (Polyhexamethylène adipamide nylon 66)

Dans les exemples on a mis en œuvre les zéolites suivantes:

### Zéolite n° 1

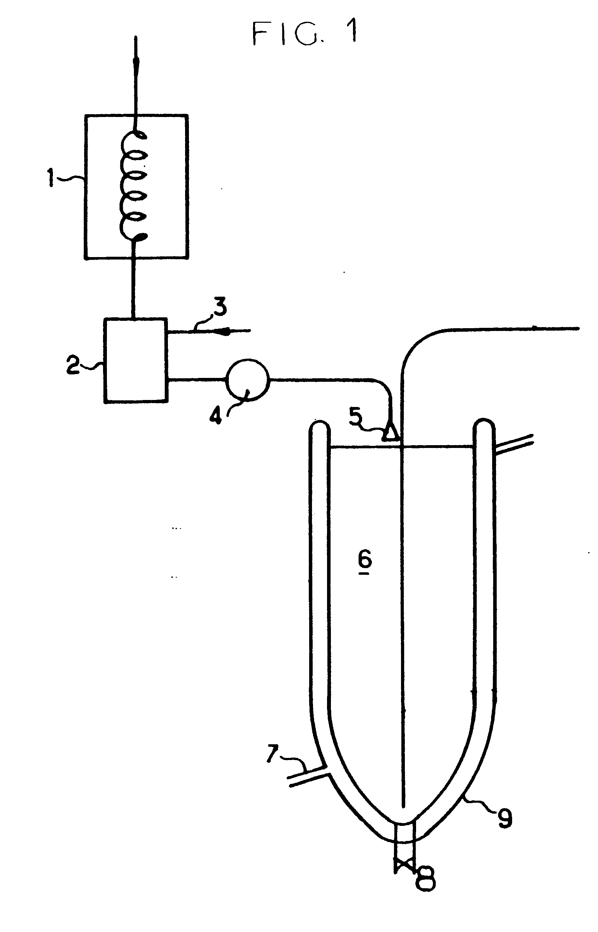

En utilisant le dispositif illustré à la figure 1 ci-annexée.

Une solution d'aluminate de sodium titrant 110 g/l comptés en $Na_2O$ et 150 g/l comptés en $Al_2O_3$ est refroidie à 0°C dans un échangeur tubulaire (1) sous un débit de 10 l/h. Le flux refroidi est mélangé en continu à un flux (3) de 4 l/h d'une solution de silicate de sodium prise à 20°C et titrant 25% de $SiO_2$ et 11,6% de $Na_2O$ en poids, dans un réacteur agité (2).

Le mélange homogène dont la température s'établit au voisinage de 12°C alimente au moyen d'une pompe péristaltique (4), un injecteur (5) à capillaires de 0,5 mm de diamètre formant en continu des gouttes qui tombent dans la partie supérieure d'un réacteur (6) rempli de pétrole maintenu à 85°C par une circulation (7) de saumure chauffée.

La densité du bain est ajustée de façon à ce que le temps moyen de chute des gouttes formées par les capillaires soit de 3 secondes. Au bout de ce temps, les particules sphériques sont gélifiées et se transforment peu à peu en une suspension fluide de silico-aluminate qui se rassemble dans la partie conique (9) du réacteur (6). On soutire en continu cette suspension par un tube d'aspiration (8), à raison de 14 l/h, après deux heures d'alimentation continue des réactifs afin de définir un temps de séjour moyen des réactifs de 2 heures dans le réacteur.

Dans cet exemple, la concentration en silico-aluminate de sodium cristallin de la suspension de microcristaux est voisine de 340 g/l, la phase liquide est pratiquement exempte de $SiO_2$ titrant 76 g/l de $Na_2O$ et 12 g/l d'$Al_2O_3$. La suspension de micro-cristaux obtenue est essorée et lavée sur une paroi filtrante de 1 d'ouverture moyenne. Le gâteau lavé est alors séché à poids constant à l'étuve à 100°C avant analyse.

Le produit obtenu présente une granulométrie homogène moyenne de 3 μm et la répartition suivante:

| % de particules | | |
|---|---|---|
| | < 1 μm | 2% |
| | < 2 μm | 20% |
| | < 5 μm | 92% |
| | <10 μm | 98% |

Zéolite n° 2

Une solution d'aluminate de sodium à 219,5 g d'aluminate est dissoute dans 757,3 g d'une solution à 10 g/l en NaOH et est refroidie à —5°C dans un échangeur tubulaire (1) sous un débit de 10 l/h. Le flux refroidi est mélangé en continu à un flux (3) de 4 l/h d'une solution de silicate de sodium prise à 20°C et titrant 26,9% de $SiO_2$ et 39,46% de $Na_2O$ en poids, dans un réacteur agité (2).

On opère comme à l'exemple 1 mais la température du mélange est égale à 15°C et le temps de séjour moyen des réactifs est de 2 heures 15 minutes.

Les conditions de l'exemple correspondent à un système initial:

$SiO_2/Al_2O_3$ = 2,00
$Na_2O/SiO_2$ = 1,19
$H_2O/Na_2O$ = 26,00

A la fin on note que les eaux-mères renferment 70 g/l de $Na_2O$, 2,6 g/l de $SiO_2$ et 3,0 g/l de $Al_2O_3$.
Le rendement théorique:

$$\frac{\text{Poids de zéolite anhydre théorique}}{\Sigma \text{ matières de départ}}$$

est de 19%.

La formule chimique du produit obtenu est 1,06 $Na_2O$, $Al_2O_3$, 2,04 $SiO_2$.

La spectre aux rayons X est caractéristique du type 4A.

La granulométrie mesurée au compteur Coulter donne un diamètre moyen des cristallites égal à 3,6 μm.

La répartition est la suivante:

| Diamètre > à | % en poids |
|---|---|
| 15 μm | 2,5 |
| 10 μm | 4 |
| 5 μm | 22 |
| 3 μm | 68 |
| 2 μm | 93 |
| 1 μm | 98 |

4

## Zéolite n° 3

On opère comme pour la zéolite n° 1.

Une solution d'aluminate de sodium titrant 200 g/l comptés en $Na_2O$ et 200 g/l comptés en $Al_2O_3$ est refroidie à —4°C dans un échangeur tubulaire (1) sous un débit de 10 l/h. Le flux refroidi est mélangé en continu à un flux (3) de 4 l/h d'une solution de silicate de sodium prise à 20°C et titrant 25,4% de $SiO_2$ et 7,4% de $Na_2O$ en poids, dans le réacteur agité (2).

Les autres conditions sont identiques sauf en ce que la température du mélange est de 15°C et le temps de séjour dans le réacteur est de 1 heure.

La suspension aspirée est ensuite essorée et lavée.

Le produit obtenu présente une granulométrie homogène moyenne de 1,5 µm de répartition suivante:

| % des particules | | |
|---|---|---|
| | < 1 µm | 20% |
| | < 2 µm | 68% |
| | < 5 µm | 95% |
| | <10 µm | 98% |

## Zéolite n° 4

Cette zéolite est conforme au FR 7 716 991 au nom de la demanderesse.

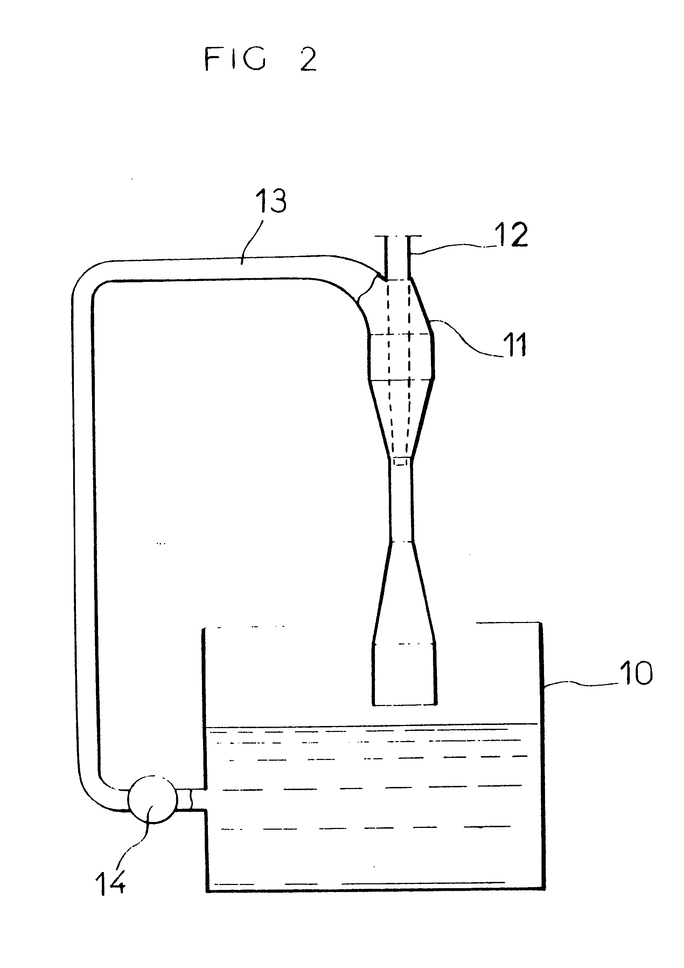

La dispositif utilisé (fig. 2) comprend un réacteur (10), un tube Venturi (11) grâce auquel s'effectue la mise en contact des réactifs.

La solution de silicate est introduite par un tube (12) alors que la solution d'aluminate ou la liqueur recyclée, est introduite par une tubulure (13), qui est associée à une pompe de circulation (14) dans le cas d'un recyclage de la liqueur provenant du réacteur 1, dans lequel on met en début d'opération tout ou partie de l'aluminate.

La partie cylindrique du tube Venturi présente un diamètre interne de 14 mm. La solution et les conditions de marche, notamment de débit, ont été déterminés de manière à obtenir des nombres de Reynolds élevés de l'ordre de 100 000 dans la partie cylindrique.

A partir d'une liqueur décomposée et provenant d'un circuit Bayer, de masse volumique 1,27 contenant 100 g/l d'$Al_2O_3$ et 182 g/l de $Na_2O$ total, on prépare 2 m³ de solution diluée qu'on ajoute dans un réacteur de 3 m³ agité (hélice) à la concentration de 64 g/l d'$Al_2O_3$ et 111 g/l de $Na_2O$ total dont 15,4 g/l de $Na_2O$ sous forme de carbonate.

On ajoute 500 l de silicate à 92 g/l de $Na_2O$ et 199 g/l de $SiO_2$ à 75°C en 45 minutes dans un Venturi avec recyclage de 10 m³/h de la solution d'aluminate. La gel obtenu a une perte au feu de 84,4%. On cristallise ensuite à 81°C pendant 2 heures.

Le diamètre moyen de la zéolite est de 3,6 µm.

## Zéolite n° 5

Le mode d'obtention de cette zéolite est identique à celui de la zéolite 2, sauf que le milieu correspond aux rapports molaires:

$SiO_2/Al_2O_3$ = 2,0
$Na_2O/SiO_2$ = 1,30
$H_2O/Na_2O$ = 25

mais on le sèche sans essorage ou filtration préalable et l'on obtient une granulométrie moyenne de 11 µm.

## Exemple n° 1

Dans cet exemple on réalise les tests sur polypropylène, en réalisant un essai sans charge, avec une charge constituée par un carbonate de calcium naturel de diamètre moyen égal à 1 µm et les cinq zéolites précitées.

Sur le tableau ci-après on a de plus indiqué en microns la taille des particules primaires et secondaires des diverses zéolites utilisées, et donné l'appréciation de la dispersion dans la matrice polypropylène.

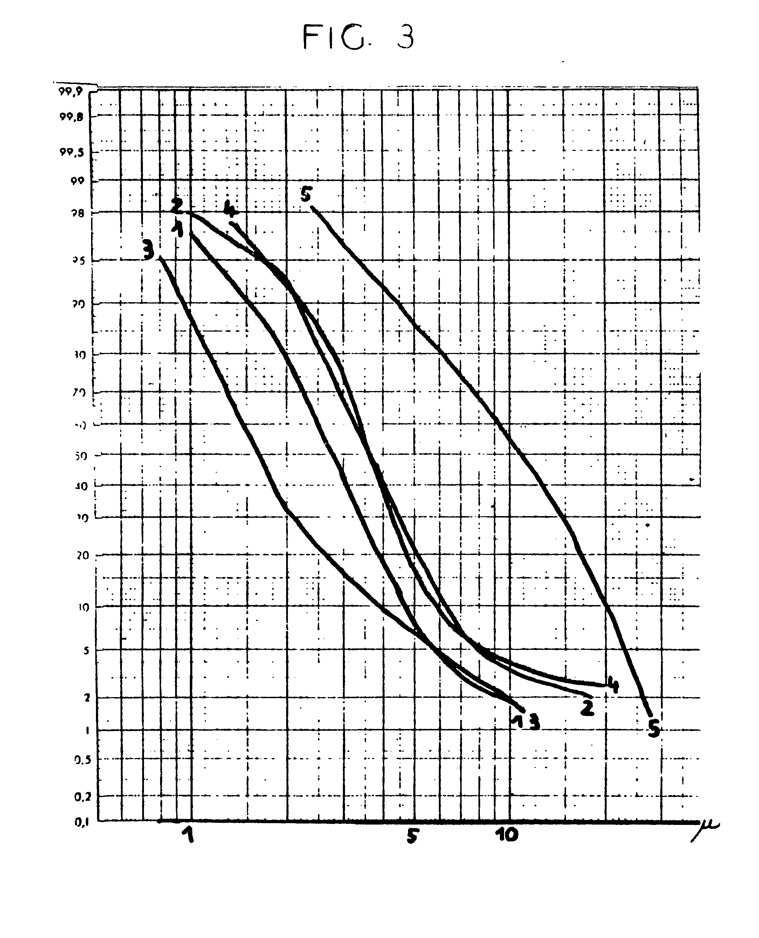

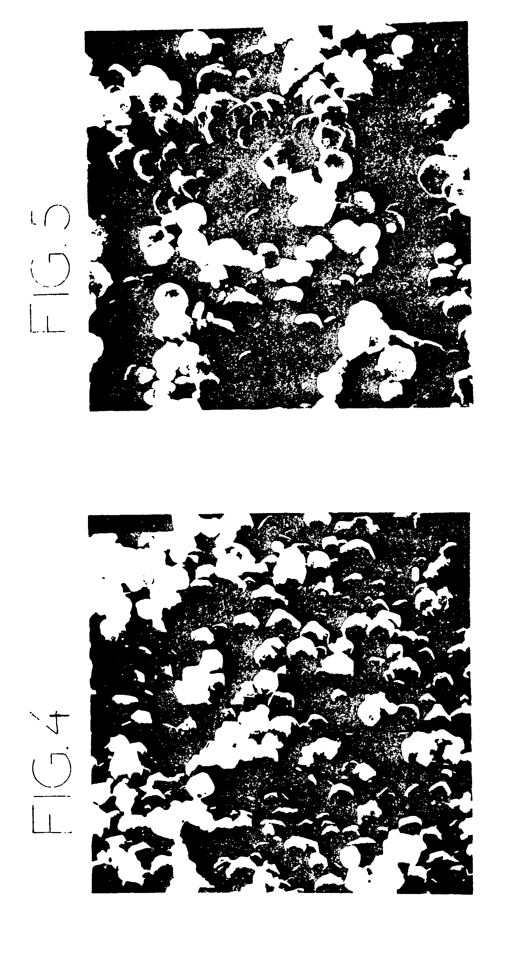

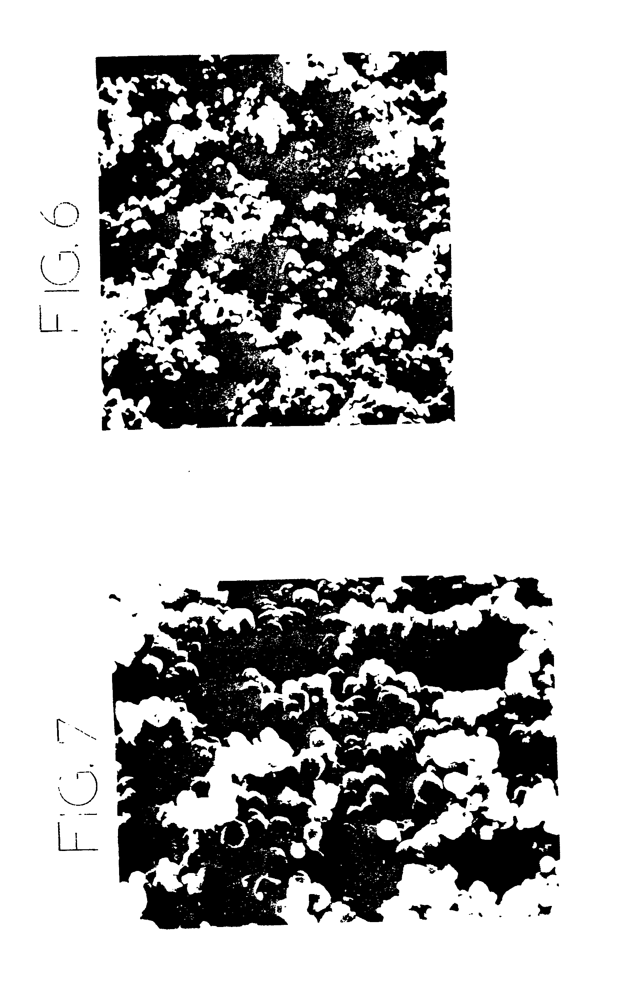

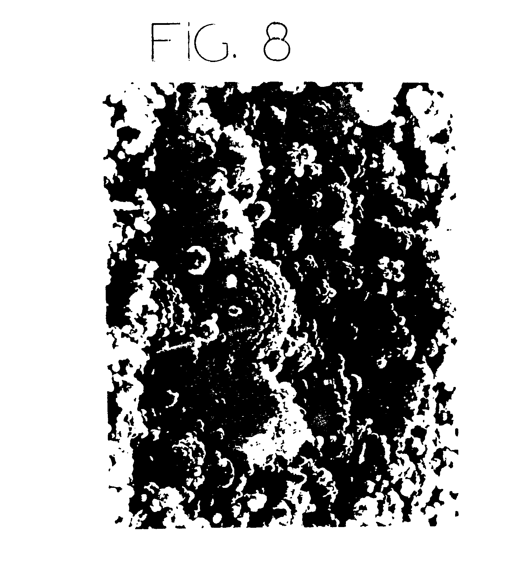

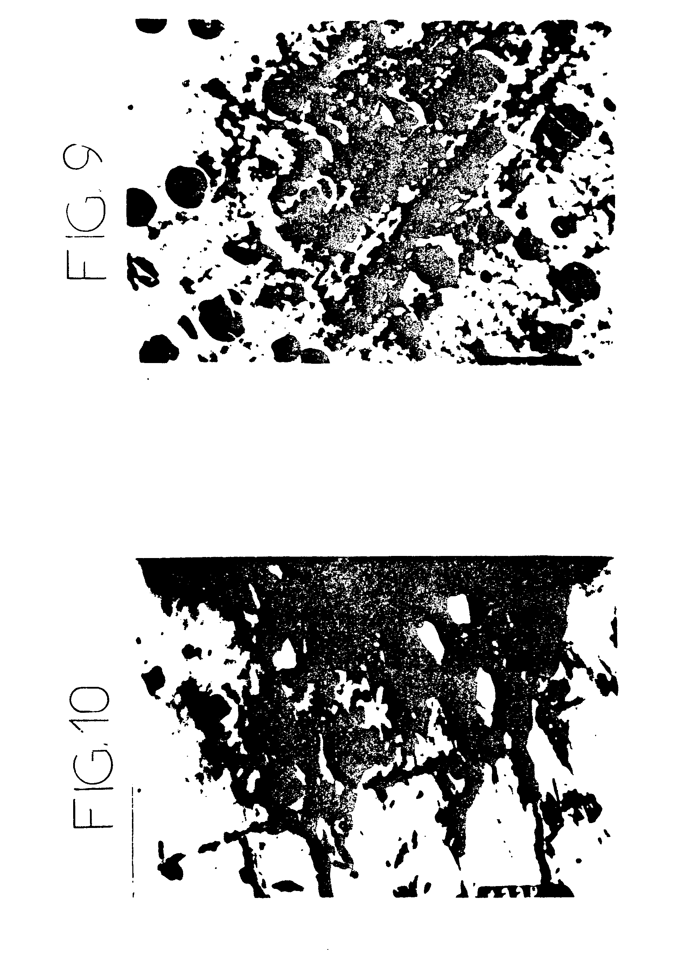

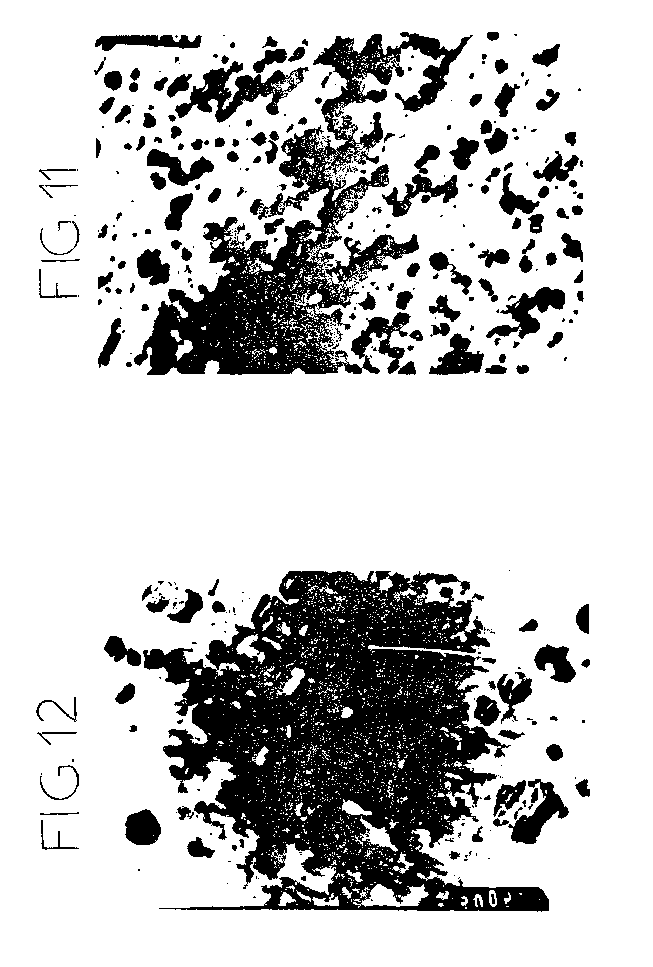

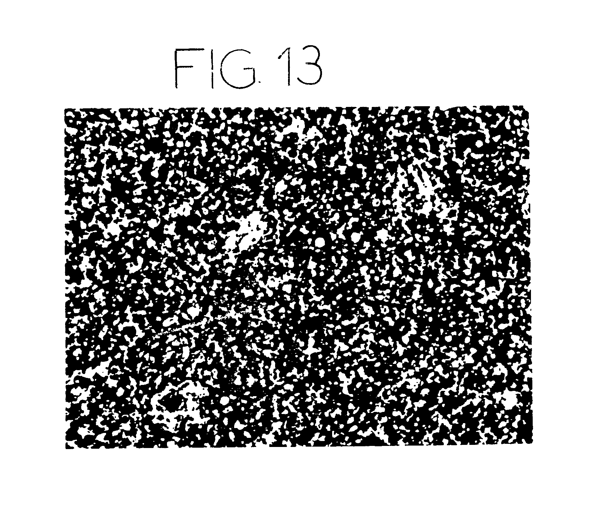

De plus, fig. 3 on a indiqué les différentes courbes granulométriques les courbes 1, 2, 3, 4, 5 correspondent respectivement aux granulométries des zéolites 1, 2, 3, 4, 5 et dans les figures 4 à 13 l'aspect au microscope électronique à balayage des zéolites et la dispersion dans le polypropylène.

Figure 4: zéolite 1
Figure 5: zéolite 2
Figure 6: zéolite 3
Figure 7: zéolite 4
Figure 8: zéolite 5
Figure 9: zéolite 1 dans polypropylène
Figure 10: zéolite 2 dans polypropylène
Figure 11: zéolite 3 dans polypropylène
Figure 12: zéolite 4 dans polypropylène
Figure 13: zéolite 5 dans polypropylène

### Exemple n° 2

Dans cet exemple on met en œuvre non plus une zéolite de type 4A, mais de type Na-P obtenue dans les conditions suivantes:

Milieu de réaction $SiO_2/Al_2O_3 = 5$
$Na_2O/SiO_2 = 0,7$
$Na_2O/Al_2O_3 = 3,5$
$H_2O/SiO_2 = 21$
$H_2O/Na_2O = 30$
Température 92°C
Temps 4 h

Tableau

| nature de la charge | Granulometrie en | | dispersion | parties en poids | choc à froid kj/m² | module de flexion en mega pascal MPa |
|---|---|---|---|---|---|---|
| | particules primaires | particules secondaires | | | | |
| carbonate de Ca | | | D | 30 | 16 | 1950 |
| zéolite 1 | 2,9 | 2,8 | D | 30 | 28 | 2020 |
| zéolite 2 | 3,5 | 3,6 | D | 30 | 28 | 2025 |
| zéolite 3 | 1,1 | 1,5 | D | 10 | 18 | 1600 |
| zéolite 4 | 2,9 | 3,5 | D | 30 | 28 | 2050 |
| zéolite 5 | <3 | 11 | ND | 30 | 7 | 1980 |
| Polypropylène de référence non chargé | | | | | 11 | 1350 |

D = bonne dispersion de la charge.
ND = charge non dispersée.

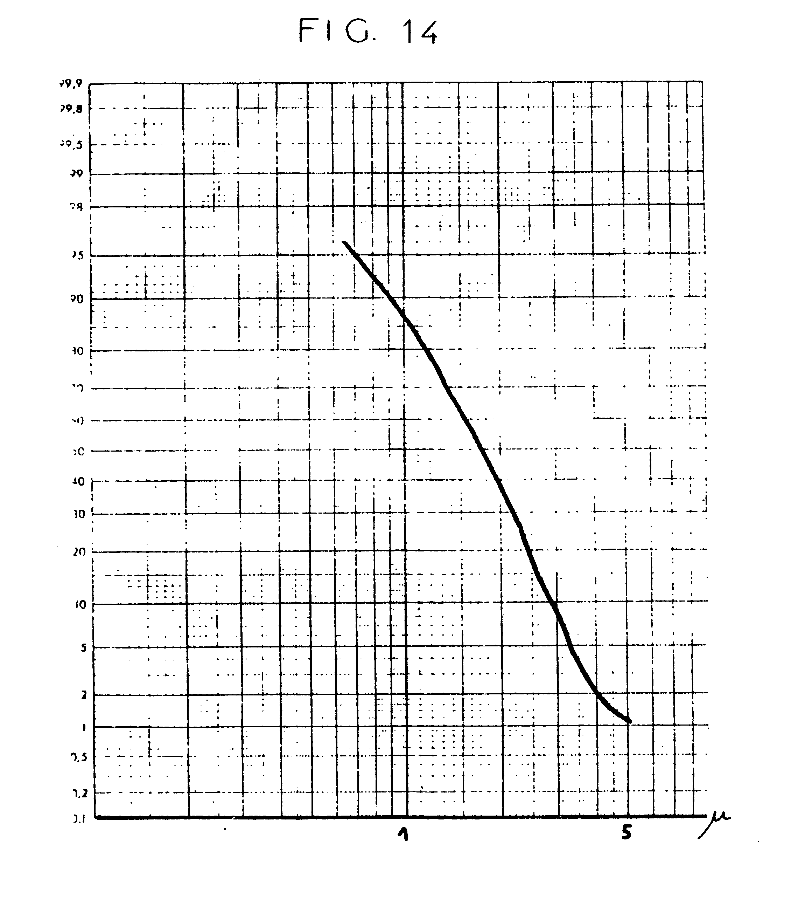

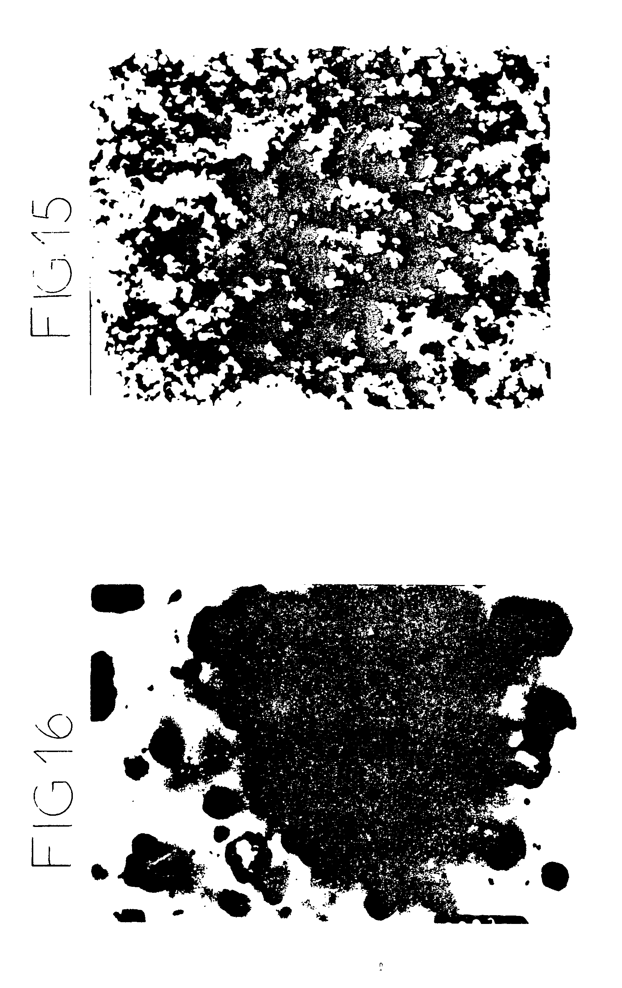

Les résultats sont illustrés figure 14 granulométrie, figure 15 zéolite seule et figure 16 zéolite dans le polypropylène.

### Exemple n° 3

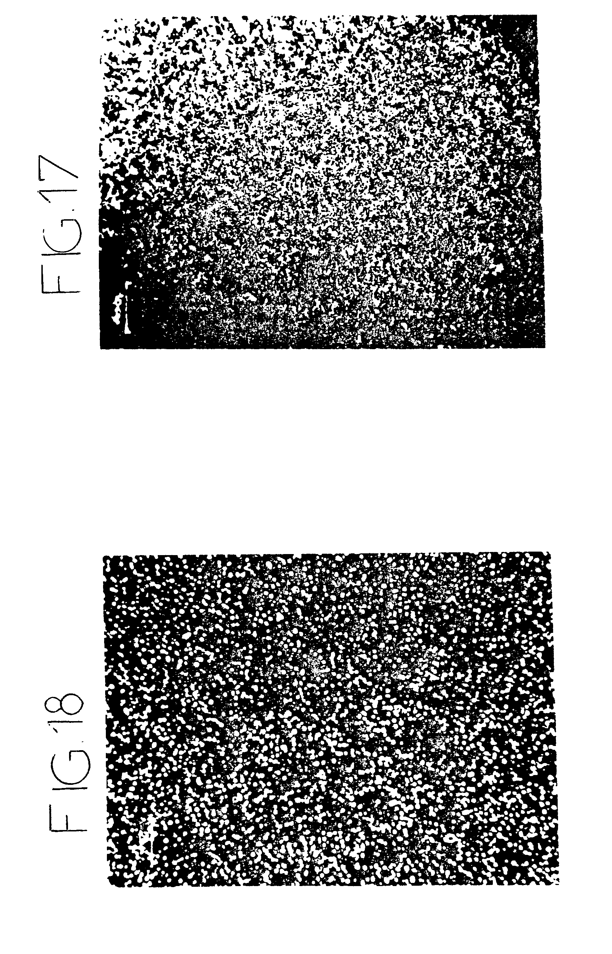

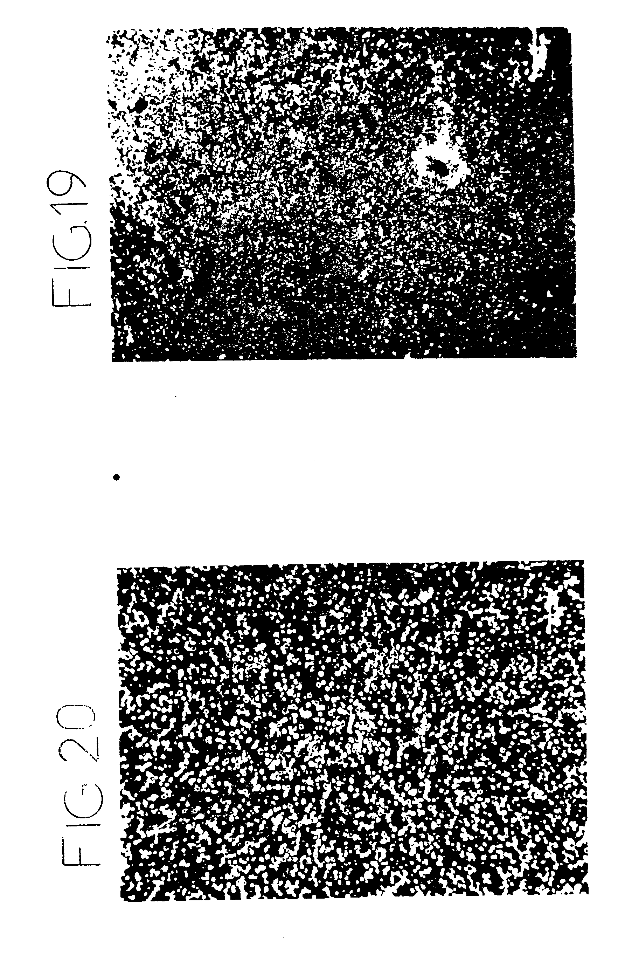

L'obtention d'un état de dispersion avancé dans le polyamide 6,6 constitue un préalable à l'obtention de propriétés mécaniques améliorées par traitement de surface des charges. Il a été observé que les zéolites selon l'invention (zéolite 1) mis en œuvre avec un polyamide 6,6 (A 216 de Rhone-Poulenc Technyl) avec un taux de 30% présentent ce caractère, à la différence de la zéolite 5 qui comme en matière polypropylène n'a pas d'aptitude, dans les conditions de la transformation, à la dispersibilité (figures 17 et 18 zéolite 1 dans polyamide, figures 19 et 20 zéolite 5 dans polyamide).

**0 042 316**

**Revendications**

1. Procédé de renforcement d'une matière à base de polypropylène par une charge à haute dispersibilité, caractérisé par le fait qu'il consiste à mettre en œuvre une charge constituée par une zéolite synthétique du groupe de la zéolite A et de la zéolite Na-P, de taille de particules inférieure à 10 μm et de taille moyenne de particules élémentaires voisine de celle des particules secondaires.

2. Procédé d'incorporation d'une charge à haute dispersibilité dans une matière à base de polyamide, caractérisé par le fait qu'il consiste à mettre en œuvre une charge constituée par une zéolite synthétique du groupe de la zéolite A et de la zéolite Na-P, de taille de particules inférieure à 10 μm et de taille moyenne de particules élémentaires voisine de celle des particules secondaires.

**Patentansprüche**

1. Verfahren zum Verstärken einer Masse auf der Basis von Polypropylen mit einem Füllstoff von hoher Dispergierbarkeit, dadurch gekennzeichnet, daß man einen Füllstoff einsetzt, der aus einem synthetischen Zeolith der Gruppe A und Zeolith Na-P mit einer Teilchengröße <10 μm und einer mittleren Größe der Elementarteilchen, die derjenigen der sekundären Teilchen nahekommt, besteht.

2. Verfahren zum Einarbeiten eines Füllstoffes hoher Dispergierbarkeit in eine Masse auf der Basis von Polyamid, dadurch gekennzeichnet, daß man einen Füllstoff einsetzt, der aus einem synthetischen Zeolith der Gruppe Zeolith A und Zeolith Na-P mit einer Teilchengröße <10 μm und einer mittleren Größe der Elementarteilchen, die derjenigen der Sekundärteilchen nahekommt, besteht.

**Claims**

1. A process for reinforcing a polypropylene-base material by a highly dispersible filler characterised in that it comprises using a filler formed by a synthetic zeolite of the group comprising zeolite A and zeolite Na-P, with a particle size of less than 10 μm and with a mean size of elementary particles which is close to the size of the secondary particles.

2. A process for incorporating a highly dispersible filler into a polyamide-base material characterised in that it comprises using a filler formed by a synthetic zeolite of the group comprising zeolite A and zeolite Na-P, with a particle size of less than 10 μm and with a mean size of elementary particles which is close to the size of the secondary particles.

FIG. 1

FIG 2

# FIG. 3

FIG. 5

FIG. 4

FIG. 6

FIG. 7

FIG. 8

FIG.10

FIG. 9

FIG. 11

FIG. 12

FIG. 13

# FIG. 14

FIG 16

FIG.15

FIG.18

FIG.17

0 042 316

FIG 20

FIG.19